# EUROPEAN PATENT APPLICATION

(11) **EP 1 324 597 A2**
(43) Date of publication of application: **02.07.2003**
(21) Application number: 02080314.4
(22) Date of filing: 16.12.2002
(51) Int. Cl.: H04N 5/232

(54) **Method and device for forming an image in an electronic device**

(30) Priority: 31.12.2001 FI 20012611
(71) Applicant: Nokia Corporation, 02150 Espoo (FI)
(72) Inventor: Perälä, Timo Juhani, 36270 Kangasala (FI)
(74) Representative: Pitkänen, Hannu Alpo Antero

(57) **Abstract**

Method and device for capturing an object with a digital camera for creating an image in electric form, in which method said picture is transmitted to an electronic device. In the method the distance between a filmed object and a camera is regulary measured and the size of the captured object is maintained essentially the same in the transmitted picture automatically adjusting the picture size on grounds of measurement in accordance with the change in said distance.

## Description

The present invention relates to a method and device for maintaining the object captured with a camera connected to an electronic device of the same size on display of an electronic device and especially, but not necessary on a display of another electronic device receiving the picture.

### Technical background

The next step of wireless data transmission will be the transmission of video picture to wireless terminal devices of cellular network, such as mobile phones. Today's technique does not yet enable these kind of electronic devices, such as portable terminal devices, due to insufficiency of transmission capacity of wireless data transmission networks and undeveloped coding techniques of video picture. While considering the requirements for a terminal device capable of processing video picture certain new problems may be noticed. A problem situation arises while using a portable videophone, which captures the face of the user from the front while the user is holding the device in his hand. Focusing of the camera in videophone to the filmed object, typically the face of the user, is the problem. It is quite probable that while the user is holding the camera in hand, filming is very difficult due to motions of the hand and the head. Changes in the picture due to motions of the camera are also a problem because while the camera moves the picture changes from video codec point of view and not even the most effective picture coding is able to maintain the quality of the picture satisfactory while using relatively low data transmitting speed used in wireless data transmission.

One solution to the earlier mentioned problems has been searched in a patent publication EP 0 884 905 A2, in which a method and a device have been presented, in which it is possible to focus the camera assembled to the device. In the method in accordance with the invention in order to create an image to be transmitted in the terminal device the user of the terminal device is captured with the camera and a picture is created of the captured picture area to be transmitted further, which picture is presented in the terminal device receiving the picture. In the EP publication solution pattern recognition is used. The pattern of the user is identified from the captured area and by comparing the content of the picture area with the pattern that has earlier been stored in the memory of the terminal device, or the image is possible to be identified, for example, with a thermograph. After the pattern (for example the pattern formed of the head and the shoulders of the user, full-size image or other pattern that is wanted to be identified) has been identified, the location of the pattern in the image area is defined. After the location of the pattern in the picture area is known it is possible to realize the focusing of the image, for example, to the face of the user in many ways.

By means of pattern recognition it is possible to define, for example, the location of user's head and shoulders from the sector the camera has captured. On the basis of this information it is possible to choose the wanted area from the captured image area by means of digital signal processing, for example the image area that covers head and shoulders. It is also possible to adjust the image area if desired, and get to the image merely the face or the whole upper body of the user. Image area adjusting may be carried out either by the user of the terminal device, or alternatively the receiver of the picture remote controlled through a separate data channel commonly included to a data transmission connection. Instead of the user of the terminal device it is also possible to identify other patterns by means of pattern recognition, for example patterns of various types of objects, that are wanted to be followed by the camera. It is therefore possible to apply the invention, for example, in distant control, and it is then possible to pick up patterns of cars or people from the image, for example, and to focus the image to be transmitted from the terminal device more closely to them. The focusing of the camera has been realized by a method based on pattern recognition. A disadvantage of pattern recognition is the great processing capacity that the device requires.

In published patent application WO 00/76177 A1 there are presented a method and a device for controlling a voice controlled operation. The purpose of the method is to avoid unintentional activation of voice controlling, which has been achieved by applying a proximity sensor to create a control signal, by means of which it is possible to define whether the user is close enough to the communication device voice controlling to be activated.

### Summary of the invention

A method and a device has now been invented, by means of which a picture created with a camera integrated to an electronic device, advantageously a wireless communication device, of a captured object is maintained optimally focused and zoomed on a display of another electronic device despite of the change in distance between the filmed object and the camera. A proximity sensor monitors the distance and the change in distance of the filmed object. On the basis of information about the distance the captured object on the display of the receiving electronic device is maintained of the same size although the captured object moves in regard with the camera such that distance increases or decreases. By using the method and device in accordance with the invention the transmitted image of an object is always of the same size. For example, in a videoconference the opposite side is able to see the pattern of the speaker at the same size and at the same quality all the time regardless of the distance of the speaker to the camera. This is advantageous especially while using a hand held device, when the distance may change in the middle of the communication connection.

According to a first aspect of the invention a method is provided for capturing an object with a digital camera in order to form an image in electric form, in which method captured image is transmitted to an electronic device, characterized in that in the method the distance between the object to be shooted and the camera is regulary measured and the size of the object in the image to be transmitted is maintained essentially of the same size by adjusting automatically the size of the object on the basis of the measurement in accordance with said change in the distance.

According to a second aspect of the invention an electronic device with a digital camera connected to it in order to create an image of an object to be captured in electrical form, said electronic device comprises tranmission means in order to transmit the image created with said camera to at least one another electronic device, characterized in that said electronic device comprises means for mesuring distance in order to measure the distance between the object to be captured and said camera and maintenance means to maintain the size of the object to be captured in the picture to be transmitted essentially of the same size by automatically adjusting the size of the picture on the basis of said measurement in accordance with said change in distance.

According to a third aspect of the invention a computer program product is provided for an electronic device with a digital camera connected to it, for creating a picture of an object to be shooted in electric form for transmitting the picture to at least one another electronic device, characterized in that the computer program product comprises computer program means for causing the measurement of the distance between the object to be filmed and the camera regulary, computer program means for maintaining the size of the picture to be filmed in transmitted picture of the same size by means of creating an automatic adjusting of the picture size based on said measurements in accordance with the change in said distance.

Next, the invention will be described in more detail with reference to the accompanying drawings, in which,
Figure 1 illustrates a flowchart of a method according to an embodiment of the invention,
Figure 2a illustrates an electronic device according to an embodiment of the invention,
Figure 2b illustrates an electronic device according to an alternative embodiment of the invention,
Figures 3a and 3b illustrate the function of a system according to an embodiment of the invention.

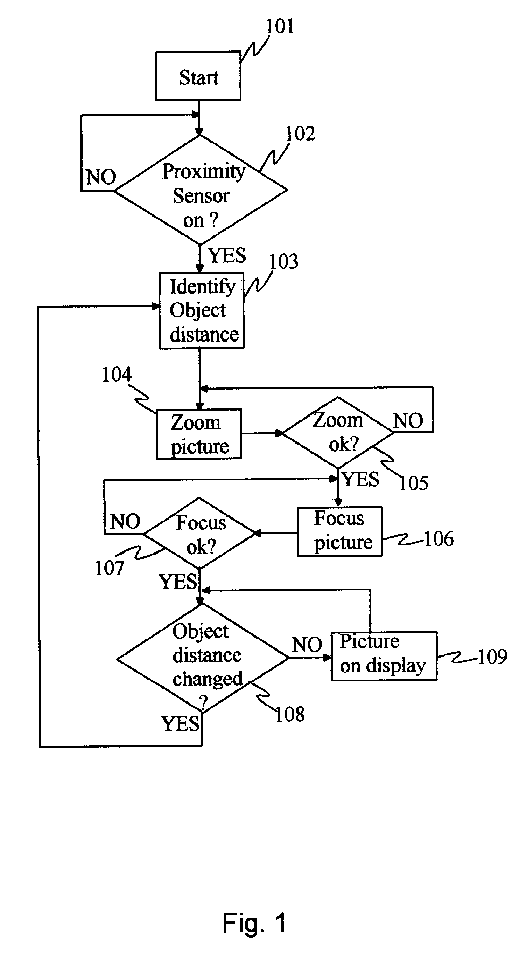

Figure 1 illustrates a flowchart of a method according to an embodiment of the invention. The phases of the method may advantageously be implemented with a computer program code stored in an electronic device. The next method may advantageously be applied while creating a video conference connection between two or more participants. In the phase 101 initializing of the system, such as an electronic device, a wireless communication device, for example, is carried out. In this connection the image created of an object by the camera connected to the device on the display of said device may be adjusted by the user, for example, to a suitable size and the sharpness as exact as needed. When the user establishes a communication connection with another communication device, the user of the other communication device is able to see the image created with said camera, which image has been adjusted to a suitable size and exact enough. In the phase 102 the processor, for example, examines whether the proximity sensor is operating. The proximity sensor may be started automatically in connection with the system start or it may be switched on and switched off separately by the user. In the phase 103 the distance of the object to be captured from the camera is been defined by the proximity sensor. In the same connection the distance of the object is been adjusted to correspond the image size and the focusing adjusted in the phase 101. Next, in the phases 104 and 105, the zooming of the image is adjusted automatically and continuously, i.e. the image to be presented on the display is been magnified or reduced until the image size of the object adjusted in the phase 101 has been reached. Zooming is continuous in regard with the refreshing of the picture to be presented on the display of the device. Distance will be measured by the proximity sensor for every refreshing of the picture and based on this distance the adjusting of the zoom is carried out. Distance is measured and zoom is adjusted in time that is less than the time needed to refresh the image. A zoomed and focused image of the object may be presented also on the display of the communication device itself connected to the camera in some occasions. For example, while taking a picture zooming may be adjusted to depend on the distance of the object to the camera. After this phases 106 and 107 follow, in which the focusing of the image presented on the display of said another communication device receiving the image is carried out until the focusing adjusted in the phase 101 is reached. In the phase 108 the change in distance of an object is examined. In case the distance of an object stays constant the image is presented on the display of the device, advantageously on the display of said another communication device receiving the picture (phase 109). Phase 103 follows in case the distance changes.

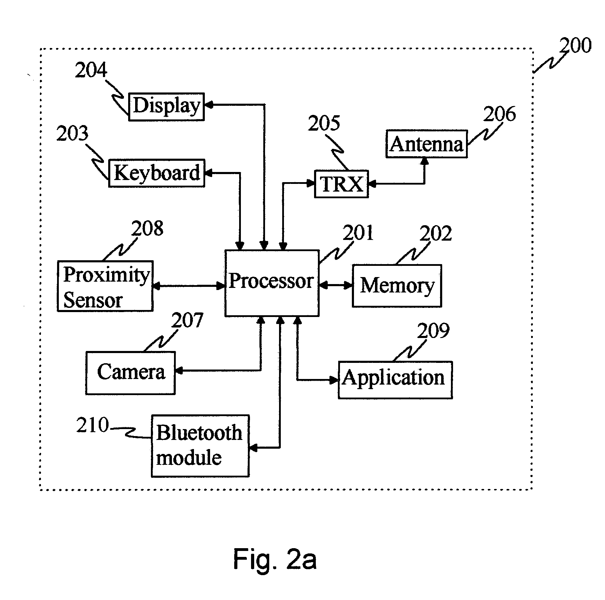

Figure 2a illustrates an electronic device in accordance with an embodiment of the invention, which device is, advantageously, a communication device operating in a wireless communication system, such as GPRS-, WCDMA communication device or a communication device operating in WLAN or Bluetooth system. The communication device 200 includes a processor 201 and a memory 202 in order to process the operations of the communication device, a keyboard 203 in order to input the information to the device as well as a display 204 to present the information such as still image or a video performance. The device 200 includes, furthermore, an equipment to create the connection, such as a transmitter-receiver 205 and an antenna 206 in order to create a wireless communication connection, for example, to another communication device through a communication network. The communication device 200 includes also a camera 207 in order to create visual information and a proximity sensor 208 in order to define the distance between said camera and the object to be captured as well as at least one application, such as a computer program product 209 in order to control the zoom of said camera, that is to magnify or to reduce and to focus the object to be presented on the display as a response to the distance defined by the proximity sensor. The connection, such as a communication connection to another communication device or a data transmitting connection between the communication device 200 and the camera 207 may be realized also by means of low range radio technique LPRF, Low Power RF, such as Bluetooth or corresponding technique.

The camera 205 comprises advantageously at least one optical lens in order to create an image on the display of the camera, which is advantageously either CCD or CMOS pixel matrix. The camera may include, furthermore, adjusting equipment in order to adjust the focusing of the image to be created and the magnifying of the image to be created. The camera 207 may be integrated to an electronic device, such as a communication device 200, or it may be possible to be connected to a communication device by means of a cable or by said Bluetooth technique. In case the camera has not been integrated to a communication device, the approximate sensor has advantageously been placed in the camera. Zooming may be carried out in a device in accordance with the invention in alternative ways depending on whether digital or optic zooming is used in order to create the zooming. In case the camera includes an optic zoom-objective, the focal distance of the objective may be adjusted, for example, by the application 209, in which case it is possible to create an image of required size of the object on the display of the receiving communication device. In case the zooming is carried out digitally, however, it is carried out, as earlier known, such that the number of pixels presented on the display changes in proportion to the distance to be filmed. Said application 209 may edit digitally the image presented on the display of the electronic device such that while the distance changes between the object to be captured and the camera, said digital zooming operation is carried out in the device 200 to the image created by the camera 207. Alternatively the digital zooming operation may be carried out also in the other receiving communication device.

Proximity sensors are mainly based on the reflection of the signal from the object, such as a user, send by the proximity sensor. A proximity sensor measures the magnitude and/or the running time of the reflected signal and based on this information creates a starting signal proportional to the distance. In proximity sensors based on the magnitude of the signal the magnitude of the signal is typically proportional to the distance. In proximity sensors based on the measurement of the running time, the time of the signal on a certain route may directly inform the duration and on the basis of this the distance can be calculated, while the velocity of propagation of the signal in a substance (air) is known. The signal for measurement of a proximity sensor is typically either an optic signal (laser/LED) or a sound signal (ultrasound). The range of measurement on proximity sensors based on optic signal is typically 0,3 m - 100 m and on proximity sensors based on a sound signal typically 0,05 m- 10 m. In terms of applying the present invention it is not significant what type of a proximity sensor 208 is used. The main criteria having influence on the choice of the proximity sensor 208 are, among other things, weight, size, price, energy need, liability, durability of vibration and required operating voltages.

In the communication device 200 in accordance with an advantageous application of the invention measurement of the distance is carried out such that first a signal is sent and after this the magnitude of the signal created by the receiving side of the proximity sensor 208 is measured and based on the magnitude of this received signal the distance between the user and the communication device 200 is concluded. proximity sensors, which create a starting signal, which directly informs the distance between the user and the communication device, are also known. In this case the distance information is received directly. In the start program, for example, the magnitude of the signal of the proximity sensor is measured without comparing measures of signal magnitudes. The zoom is refreshed continuously and advantageously such that the zooming takes place quicker than the refreshing of the image on the display of the device. For example, if the refresh rate on the display of the device is 50 Hz, i.e. the duration of the image on the display is 20 ms, the next image presented on the display must be zoomed advantageously in less than 20 ms. The refreshing time mentioned earlier depends on the equipment in use.

A user may carry out the setting of parametres related to the presentation of the information when required or original settings may be exploited. These settings are, as most convenient, stored in memory 202, such that earlier stored parametres are available also later without any need to set them again in connection with every start.

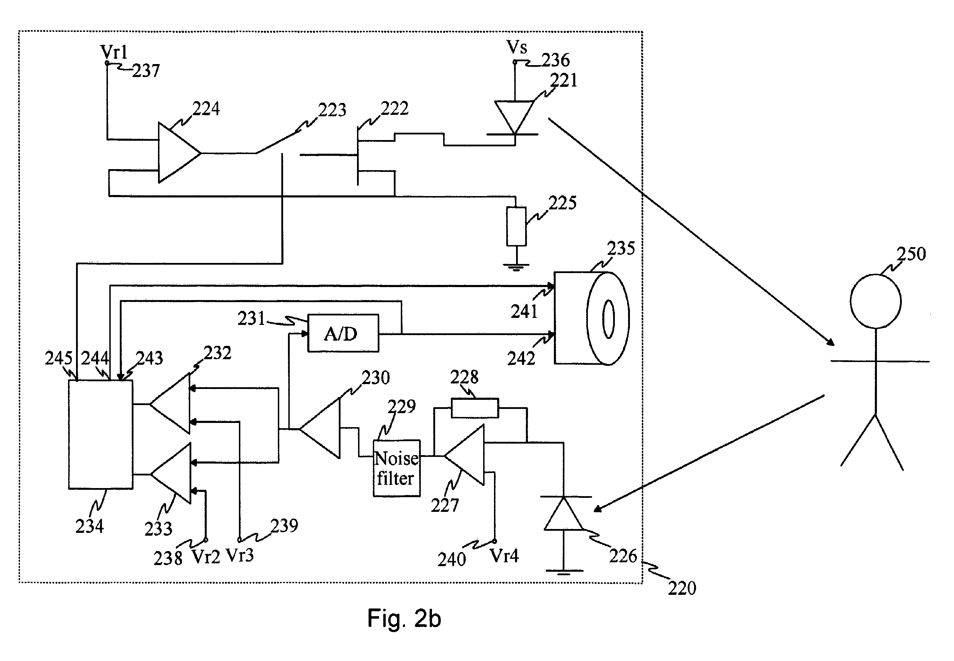

Figure 2b illustrates an electronic device 220 according to an alternative embodiment of the invention. The device includes a camera module 235 and a proximity sensor presented as an illustrating example, which includes a transmitter (221-225) and receiver part (226-234). The proximity sensor presented next is advantageously a system of an infrared transmitter and an infrared receiver. Also other kinds of methods may be used to measure distance, such as an ultrasound sensor, in which transmitting and receiving are carried out using ultrasound, or a proximity sensor, which measures thermal radiation radiating only from the object itself and on the basis of the change in this thermal radiation the change in distance may be expressed. The most advantageous realization is to exploit infrared light pulse to measure distance, because the light speed is advantageous when the result of measurement is quickly needed.

The transmitting part includes a transmitting component 221, (for example an infrared led) an inlet 236 in order to feed the inlet voltage to the transmitting component and another inlet 237 in order to feed the reference voltage to the amplifier 224. The amplifier 224 transfers the voltage into current and current is transferred into a current pulse in a switch 223, which is controlled with the outlet 245 in the digital section 234. The current pulse is amplified in the amplifier 222 (for example a FET-transistor), which controls the current coming through the transmitting component 221. The transmitting component 221 transfers current pulses into infrared light. An infrared light pulse is sent at least once in the time that the refreshing of the picture presented on the display takes. An infrared light pulse may be transmitted also in shorter time delay than earlier mentioned, for example in every microsecond.

Infra-red light pulse reflected from the object is received by the receiving component 226 (for example an infra-red sensor) and transferred into a current pulse, which is transferred into voltage by a resistance 228 and an amplifier 227 and by reference voltage Vr4 fed to the amplifier through the inlet 240. Voltage is filtered by means of a filter 229 (for example a low-pass filter) and the level of voltage signal can be corrected if needed by a compensated amplifier 230. Amplified voltage signal is transmitted further to an AD converter 231, which transfers the analogical signal into a digital number, which is further used to control the zooming of the camera module. The time period between the transmitting the infra-red light pulse and adjusting the zooming and the focusing of the camera is advantageously shorter than the period between refreshing the picture presented on the display of the device, which may be, for example, 50 Hz, because at frequency 50 Hz and more a human eye is not capable of noticing disadvantageous jerky movements in a moving picture. There is an input 242 in the camera 235 in order to receive said digital number from the ADconverter 231. The digital number tells the camera what the distance to the object to be filmed is and how much the distance of the object to be captured has changed and how much the image must be zoomed (i.e. magnified or reduced). There is still another inlet 241 in the camera 235, in order to receive the control signal from the outlet 244 of the digital section 234. Based on said control signal the direction of zooming is defined. For example, in case the object moves further from the camera the control signal informs the direction to the camera, to which the image to be presented must be adjusted, i.e. in this case the image is zoomed larger. The digital number is directed from the outlet 231 of AD converter also to input 243 of the inner digital section 234 of ASIC. The digital section 234 is advantageously an inner section of ASIC, which includes, for example, the logic needed in controlling the proximity sensor. From the compensated amplifier 230 the voltage signal is guided further to comparators 232 and 233, in which the lower and higher level of voltage signal pulse are compared with the reference voltage Vr2 (ref. 238) and Vr3 (ref. 239).

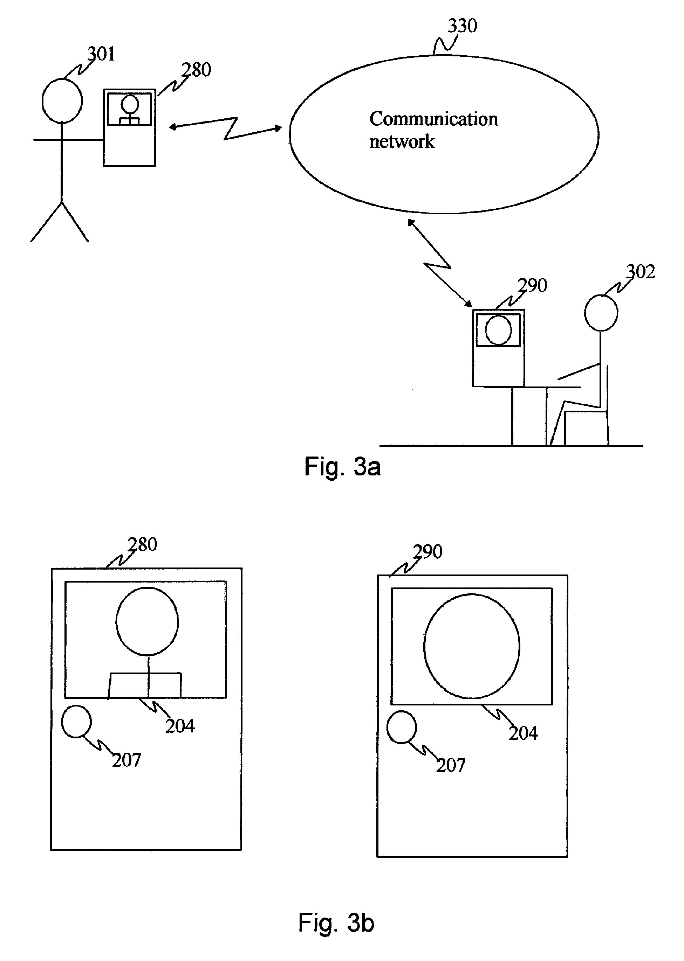

Figure 3a illustrates the operation of a system according to an embodiment of the invention. The communication device 280 and 290 is advantageously as presented in figure 2a. The user 301 of the communication device 280 opens a communication connection through a communication network, for example, a conference phone connection, in which both users 301, 302 are filmed continuously. The image of the user 302 of the communication device 290 can be seen on the display 204 of the communication device 280 and correspondingly the image of the user 301 of the communication device 280 can be seen on the display 204 of the communication device 290. The user of the communication device 301 is holding the communication device 280 in his hand and the distance between the communication device 280 and the user 301 may be, for example, some 10 cm - 60 cm. The user 302 of the communication device 290 has placed the communication device 290 on his desk and the distance between the communication device 290 and the user 302 may be, for example, some 40 cm - 80 cm.

The proximity sensor of the communication device 280 (correspondingly 290) in accordance with the invention examines the distance and possible changes in distance of the object to be filmed, i.e. in this case the user 301 (correspondingly 302), with respect to the camera of the communication device. Based on the information about the distance instructions to carry out focusing and magnifying/reducing of the image to be formed are given to the camera 207 of the communication device. Should the filmed person, such as the user 302, move with respect to the communication device 290 to different distance the automatic zooming/focusing function would take care that the receiver, in this case the user 301 of the communication device 280 is able to see the image of the user 302 of the communication device 290 all the time clearly and in the same size on the display of the communication device 280.

Figure 3b illustrates as an illustrative example a communication device 280, on display 204 of which a half-length picture of the user 302 of the communication device 290 has been presented, and a communication device 290, on display of which a face picture of the user 301 of the communication device 280 has been presented. Image information on the display of the communication device 280, 290 may earlier been adjusted to be of suitable size either by the communication device 280, 290 or the user 301, 302 and the parametres corresponding the adjusting may be stored to the memory of the communication device 280, 290 for later use. Adjusting may be carried out such that the image presented is always of the same size, i.e. for example, that the image is always either a face picture or a half-length picture regardless of the distance of the communication device 280, 290 from the user 301, 302.

The above disclosure illustrates the implementation of the invention and its embodiments by means of examples. A person skilled in the art will find it apparent that the invention is not restricted to the details of the above-described embodiments and that there are also other ways of implementing the invention without deviating from the characteristics of the invention. The above embodiments should thus be considered as illustrative and not restrictive. Hence the possibilities of implementing and using the invention are only restricted by the accompanying claims and therefore the different alternative implementations of the invention, including equivalent implementations, defined in the claims also belong to the scope of the invention.

## Claims

1. A method for capturing an object with a digital camera in order to form an image in electric form, in which method captured image is transmitted to an electronic device,**characterized**in that in the method the distance between the object to be captured and the camera is regularly measured and the size of the object in the picture to be transmitted is maintained essentially of the same size by adjusting automatically the size of the picture on the basis of the said measurement in accordance with said change in the distance.

2. A method in accordance with claim 1, **characterized in that** the measurement of the distance is based on the measurement of the change in magnitude of the signal reflected back.

3. A method in accordance with claim 1, **characterized in that** the measurement of the distance is based on the measurement of the delay of the signal.

4. A method in accordance with claim I, **characterized in that** the measurement of the distance is based on the change in the quantity of thermal radiation received from the object.

5. A method in accordance with claims 1-4, **characterized in that** said measurement is carrid out continously.

6. A method in accordance with claim 5,**characterized in that** the object to be presented on said display is maintained of the same size by means of adjusting the digital zooming of the camera in response to the measured distance.

7. A method in accordance with claim 5,**characterized in that** the object to be presented on said display is maintained of the same size by means of adjusting the optical zooming of the camera in response to the measured distance.

8. A method in accordance with claims 6and7,**characterized in that** further in the method the zooming and the focusing of the camera are controlled in order to maintain said image to be sent optimally focused while the distance between the object and the camera change.

9. A method in accordance with claim 1,**characterized in that** the image is transmitted to an electronic device via transmission path.

10. A method in accordance with claim 9,**characterized in that** said transmission path is wireless.

11. A method in accordance with claim 10,**characterized in that** said wireless transmission path is a radio frequency connection in a cellular network.

12. An electronic device (200) with a digital camera (207) connected to it in order to create an image of an object to be captured in electrical form, said electronic device (200) comprising tranmission means (201-206) in order to transmit the picture created with said camera to at least one another electronic device, **characterized in that** said electronic device (200) comprises means for measuring distance (208) in order to measure the distance between the object to be captured and said camera (207) and maintenance means (201, 202, 207, 209) to maintain the size of the object to be captures in the image to be transmitted essentially of the same size by automatically adjusting the size of the image on the basis of said measurement in accordance with said change in distance.

13. A device in accordance with claim 12,**characterized in that** said means for measuring distance have been arranged to measure said distance by means of sending and receiving an acoustic signal.

14. A device in accordance with claim 12,**characterized in that** said means for measuring distance have been arranged to measure said distance by means of sending and receiving an optical signal.

15. A device in accordance with claim 12,**characterized in that** said means for measuring distance have been arranged to measure said distance by means of receiving the thermal radiation reflecting from the object.

16. A device in accordance with claims 13 and 14,**characterized in that** said means for measuring distance have been arranged to measure the change in magnitude of the received signal.

17. A device in accordance with claims 13 and 14,**characterized in that** said means for measuring distance have been arranged to measure the delay of said sent signal.

18. A device in accordance with claims 12 and 17,**characterized in that** said means for measuring distance have been arranged to carry out said measurements continously.

19. A device in accordance with claims 12-18, **characterized in that** said maitenance means have been arranged to maintain the size of said object of the same size on the display of the device receiving the image by digitally adjusting the picture to be presented on the display.

20. A device in accordance with claims 12-18, **characterized in that** said maintenance means have been arranged to maintain the size of said object of the same size on the display of said device by adjusting the optical zoom of said camera.

21. A device in accordance with claims 19-20, **characterized in that** said maintenace means have, furthermore, been arranged to maintain the image to be formed optically focused while the distance between the object and said camera change.

22. A device in accordance with claims 12-21, **characterized in that** said device is a hand held device.

23. A device in accordance with claim 22, **characterized in that** the said device is a wireless communication device.

24. A computer programme product for an electronic device (200), with a digital camera (207) connected to it, for creating an image of an object to be captured in electric form for transmitting the image to at least one another electronic device, **characterized in that** the computer program product comprises
computer program means for causing the measurement of the distance between the object to be captured and the camera regulary,
computer program means for maintaining the size of the object to be filmed in transmitted image of the same size by means of creating an automatic adjusting of the image size based on said measurements in accordance with the change in said distance.
